# EUROPEAN PATENT APPLICATION

(11) **EP 2 487 475 A1**
(43) Date of publication of application: **15.08.2012**
(21) Application number: 11154173.6
(22) Date of filing: 11.02.2011
(51) Int. Cl.: G01G 19/52, G01G 21/28, G01G 23/00

(54) **Weighing scale**

(71) Applicant: Camry Industries (HK) Ltd., Kowloon, Hong Kong (CN)
(72) Inventor: Chiu, Chun Chun, Chaiwan Hong kong Hang Fa Chuen (CN)
(74) Representative: van Westenbrugge, Andries

(57) **Abstract**

The invention relates to a weighing scale (1) comprising a weight sensor (11) arranged for determining the weight of an object placed on a weighing surface (3, 23) of the weighing scale when the weighing scale is in a first orientation, the weighing scale being positioned on a supporting surface (14), wherein the weighing scale has a magnetic element (12) suitable for attaching the scale (1) in a second orientation to an essentially vertical surface (15) comprising magnetic metal, whereby the magnetic element (12) is arranged such that when the scale is in the first orientation, the weight sensor (11) is directly or indirectly supported by the magnetic element (12).

## Description

The invention relates to weighing scales, for example for weighing goods in a kitchen.

A weighing scale, in particular a kitchen weighing scale, is typically placed on a working surface when it is being used. After use, the scale is usually stored, for example in a cupboard, so that the area of the working surface previously occupied by the scale can be used for other purposes. Other kitchen scales are stored by attaching them to a vertical surface, such as a kitchen wall. Known kitchen scales have a hook or other fastening means provided on the bottom surface so that they may be attached vertically to a compatible fastening means that is fixed to a wall or other vertical structure.

EP 1 688 719 discloses a kitchen scale system suitable for mounting on a wall. In order to be able to attach the scale to the wall, a hanger device must first be permanently attached to the wall.

Affixing a permanent hanger device to a wall requires a considerable effort from the user of the weighing scale. Furthermore, said hanger device may not be esthetically pleasing. Also, the wall may not be suitable for securely affixing the hanger device.

It is a goal of the invention to provide a kitchen scale that may be attached to a wall or other vertical structure in an easier fashion.

This goal is achieved by providing a weighing scale comprising a weight sensor arranged for determining the weight of an object placed on a weighing surface of the weighing scale when the weighing scale is in a first orientation, for example when the weighing scale is positioned on a supporting surface, characterized in, that the weighing scale has a magnetic element suitable for attaching the scale in a second orientation to an essentially vertical surface comprising metal, in particular magnetic metal, whereby the magnetic element is arranged such that when the scale is in the first orientation, the weight sensor is directly or indirectly supported by the magnetic element.

The magnetic element can be generally any magnetic field producing element. In particular, it may advantageously be formed as a permanent magnet. The magnetic element may comprise a ferromagnetic material, in particular a hard ferromagnetic material. Weight sensors for measuring a weight on a weighing scale are well known.

The first orientation of the weighing scale may be an essentially horizontal orientation, whereby the scale is placed on a working or supporting surface so that a weight may be placed on the weighing surface of the scale in order to measure it's weight. Weight sensors for a weighing scale can be formed as a load cell or other type of sensor, and can be based on resistance sensing, capacitive sensing, etc. These weight sensors, when suitable calibrated, typically register the weight of an object placed directly or indirectly on top of the sensor, so that the object's gravitational force pushes down on the weight sensor. The sensor can thus be said to at least partially support the object to be weighed, either directly or indirectly.

The second orientation of the weighing scale may be an essentially vertical orientation, in which the scale may be stored when not in use. According to the invention, the scale can be attached to a vertical surface comprising metal using the magnetic elements. This arrangement advantageously does not require a permanent hanger device to be installed on the vertical surface.

When in use, the weighing scale may be placed on a working surface. In some cases, the working surface will comprise metal. For example, many kitchen working surfaces comprise metal. In these cases, for the correct functioning of the weighing scale having magnetic elements, it is vital that the additional pulling force from the magnetic elements towards the working surface is not registered as a gravitational force by the weight sensor. Therefore, the one or more magnetic elements are arranged with respect to the one or more weight sensors in such manner that in the first orientation any magnetic attraction between a magnetic element and the working surface is not registered by a weight sensor. This effect can be achieved by placing the magnetic element directly or indirectly underneath (where "underneath" means in the context of the first orientation of the weighing scale) the weight sensor. In this case, the magnetic element can be said to directly or indirectly support the weight sensor.

Advantageously, the weighing scale has a plurality of weight sensors. The weighing scale may have a plurality of magnetic elements. Advantageously, the number of weight sensors equals the number of magnetic elements. In a particularly advantageous embodiment, the weighing scale has four weight sensors and four magnetic elements, the sensors and magnetic elements distributed in a symmetrical fashion so that the load of the object to be weighed may be generally equally divided among the sensors, for example by having the sensors on the corners of an imaginary rectangle.

It is noted that EP 1 688 719 discloses a hanger device having a magnetized seating. The hanger device may be magnetically attached to a surface comprising metal. A weighing scale may be attached to the hanger device. With the hanger device attached to it, the weighing scale of EP 1 688 719 is not usable for weighing objects.

In an embodiment, the magnetic element is positioned directly underneath, with respect to the first orientation, the weight sensor. The magnetic element can then be said to directly support the weight sensor. In a particularly advantageous embodiment, the scale comprises multiple (for example, four) weight sensors, where underneath each weight sensor a magnetic element is positioned. The magnetic elements are thus placed between the weight sensor and a supporting surface when the weighing scale is in the first orientation. This arrangement advantageously prevents that any magnetic force between the magnetic elements and the supporting surface is registered by the weight sensors as a false weight.

In an embodiment, the weighing scale has a housing comprising the weighing surface, and the weight sensor is essentially surrounded by or protruding from the housing. Incorporating the weight sensor largely inside the housing, results advantageously in a more robust and esthetically pleasing design.

In an embodiment, the magnetic element protrudes from the housing. In an alternative embodiment, the magnetic element is essentially surrounded by the housing. By incorporating the magnetic element at least partly in the housing, the length of the elements protruding from the housing is reduced, which is more robust and may be considered esthetically pleasing.

In an embodiment according the invention, the housing of the weighing scale is provided with a fastening element, arranged to cooperate with a hanger device that is affixed to the vertical surface. In this arrangement, when the user of the weighing scale does not have a surface comprising metal for attaching the scale, the user may affix the hanger device to a wall and then use the fastening element provided on the housing, in particular on the bottom of the housing, to attach the scale to the wall.

In an embodiment, the fastening element is attachable to and detachable from the housing. Advantageously, the user only attaches the fastening element to the housing when it is needed.

In an embodiment, the magnetic elements are attachable to and detachable from the housing.

The invention further provides a weighing scale comprising a weight sensor arranged for determining the weight of an object placed on a weighing surface of the weighing scale when the weighing scale is in a first orientation, the weighing scale for example being positioned on a supporting surface, characterized in, that the weighing scale has a magnetic element suitable for attaching the scale in a second orientation to an essentially vertical surface comprising magnetic metal, whereby the magnetic element is arranged such that when the scale is in the first orientation, any magnetic force between the magnetic element and a supporting surface comprising metal is not registered by the weight sensor.

The invention will now be described, by way of example, in reference to the accompanying figures, in which.
figures 1a-c show a weighing scale according the invention in a top, side and bottom view;
figures 2a-c show a detail of a weighing scale in a side view;
figures 3a-b show a weighing scale attached to a vertical surface; and
figures 4a-b show a bottom view of a weighing scale according the invention.
figure 5 shows a weighing scale according the invention in a side view.

Figure la shows a weighing scale 1 in a top view. The scale has a top surface 2, part of which is a weighing surface 3 arranged to place an object to be weighed on. The scale is provided with a display 4 for displaying information, such as the measured weight. The scale has a housing 10 that comprises the top surface 2. The housing 10 can be made of metal or plastic or any other suitable material. The top of the scale 2 is further provided with control units 5, for example buttons, for selecting functionality of the scale. The scale is also provided with a side button 6 in a side 7 of the housing 10 for further functionality. Functionality of the control units can be, for example, turning the scale on and off, calibration, etc. The scale may be provided with a processing unit (not shown) for implementing said functionality. The processing unit may have access to a memory unit, for example in order to store and retrieve preference settings.

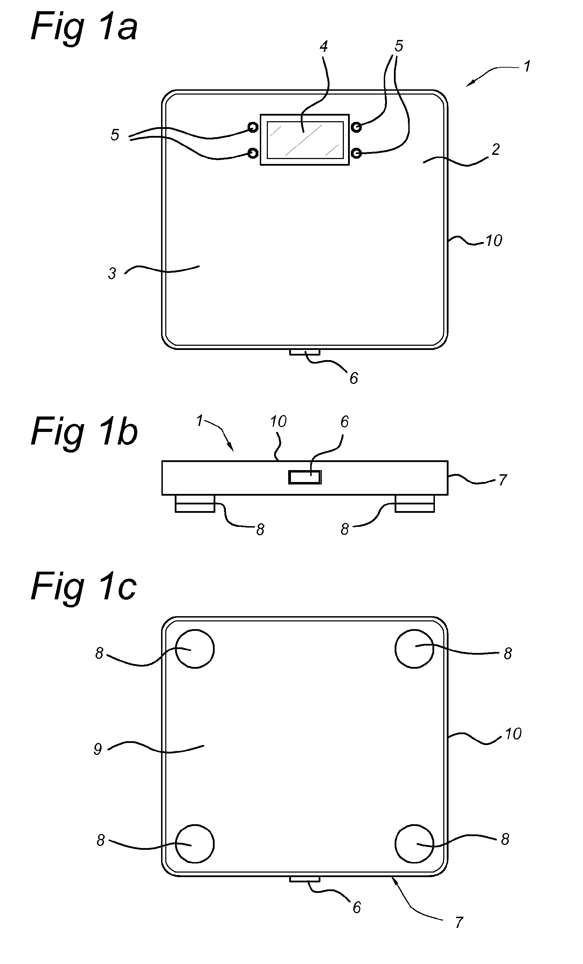

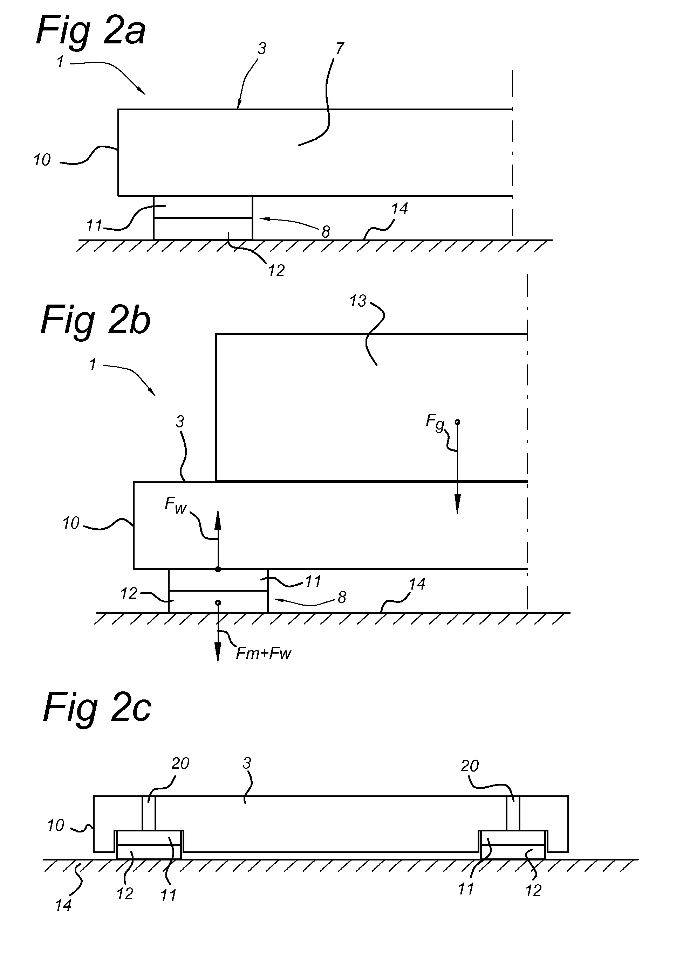

Figure 1b shows a side view of a weighing scale 1 according the invention. The scale has multiple, in this case four, supports 8, which will be discussed in more detail in reference to figures 2a-c. Figure 1c shows a bottom view of a scale 1 having a bottom surface 9 and four supports 8.

Figure 2a shows a side view of a weighing scale 1 according the invention. The housing 10 has a side surface 7. Underneath the housing 10, four supports 8, of which one is shown in figure 2a, protrude. The weighing scale 1, in particular the housing 10 of the scale, is supported by the supports 8, which in turn are supported by a supporting surface 14. The supporting surface can for example be a working surface of a kitchen. In use, the weighing scale is positioned in a first, essentially horizontal orientation. The supports 8 comprise a weight sensor 11 on top of a magnetic element 12. The weight sensor 11 can be a known load cell or any other suitable weight sensor element. The magnetic element 12 is preferably a permanent magnet. The magnetic element 12 may be provided with a soft covering (not shown) to prevent scratching of the surface 14 on which the scale is placed. Such a covering may for example be formed of plastic or textile.

The functioning of an exemplary weighing scale according the invention is now discussed in reference to figure 2b which shows the weighing scale in the same orientation as figure 2a. A weight 13 is placed on top of the scale, in particular on the weighing surface 3 of the top surface 2. This weight 13 gives rise to a downward gravitational force Fg. This gravitational force is distributed by the generally inflexible housing 10 over the various weight sensors 11. Weight sensor 11 registers a reaction force F_{w}. The total contribution of the reaction forces F_{w} of all weight sensors cancels against the gravitational force Fg from the center of gravity of object 13. The weighing scale has processing means (not shown) arranged to receive signals representing the magnitude of F_{W} from weight sensors 11 and to display the combined weight on the display 4.

In the current example, the supporting surface 14 comprises a metal. For example, the surface 14 may be a metallic kitchen counter surface. Therefore, the magnetic element 12 in the support 8 is attracted to the supporting surface 14 with magnetic force Fₘ. The total force exerted by the magnetic element 12 on the surface 14 is then (ignoring for now the relatively small contributions of the weight of the magnetic elements 12 and weight sensors 11) equal to Fₘ + F_{w}. The additional magnetic force Fₘ is not registered by the weight sensor 11. The weight sensor 11 effectively rests on the magnetic element, which in turn rests on the supporting surface. The weight sensor 11 can be said to be directly supported by magnetic element 12.

The setup of example 2b can also be described as follows. The object 13 is supported by the weighing surface 3, which is part of the housing 10. The housing 10 is supported by weight sensors 11 (comprised in supports 8), which are each in turn supported by a magnetic element 12 (also comprised in supports 8), which are in turn supported by the surface 14.

The magnetic elements 12 have a side which, in use, is facing the supporting surface 14. From this side, magnetic force lines extend, such that an attracting magnetic force is generated between the magnetic elements 12 and the supporting surface 14. The weight sensors are essentially outside of the range of these magnetic force lines, so that the weight sensors 11 are essentially unaffected by the magnetic force. Furthermore, any object 13 on the weighing scale, when in use, is essentially outside of the range of magnetic force lines, so that there is essentially no magnetic attraction between the object 13 and the magnetic elements 12.

In figure 2c, an alternative embodiment is shown. Here the sensor 12 and magnet 11 stacks are largely surrounded by the housing 10.The housing 10 is supported by the weight sensors 12 via supporting elements 20. Just enough of the magnetic elements 12 protrudes from the bottom surface 9 of the housing 10 for the total weight of the object 13, housing 10, and weight sensors 11 to be supported by the magnetic elements 12, which in turn are supported by the supporting surface 14. When the weight sensors 11 and magnetic elements 12 are largely incorporated in the housing, a more robust design may be obtained.

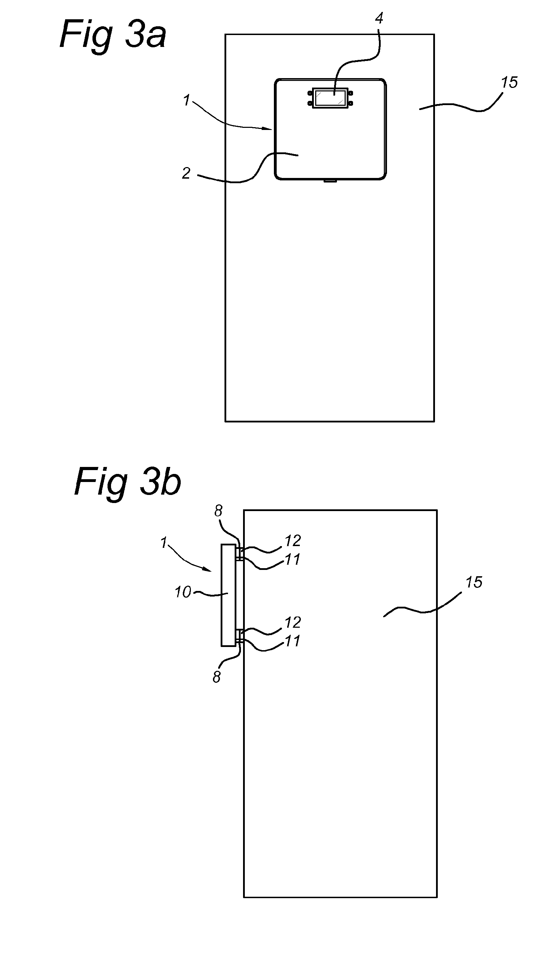

Figures 3a and 3b show the weighing scale 1 in a second, essentially vertical orientation. The weighing scale is attached, via the magnetic elements, to a vertical surface 15 comprising metal. This surface 15 may be a refrigerator door. It may also be a metal sheet attached to a wall, or any other metallic surface. Advantageously, the magnetic elements 12 allow the weighing scale to be removably attached to a vertical wall, when the scale is not in use. Figure 3a shows a frontal view of such an arrangement, whereas figure 3b shows a side view.

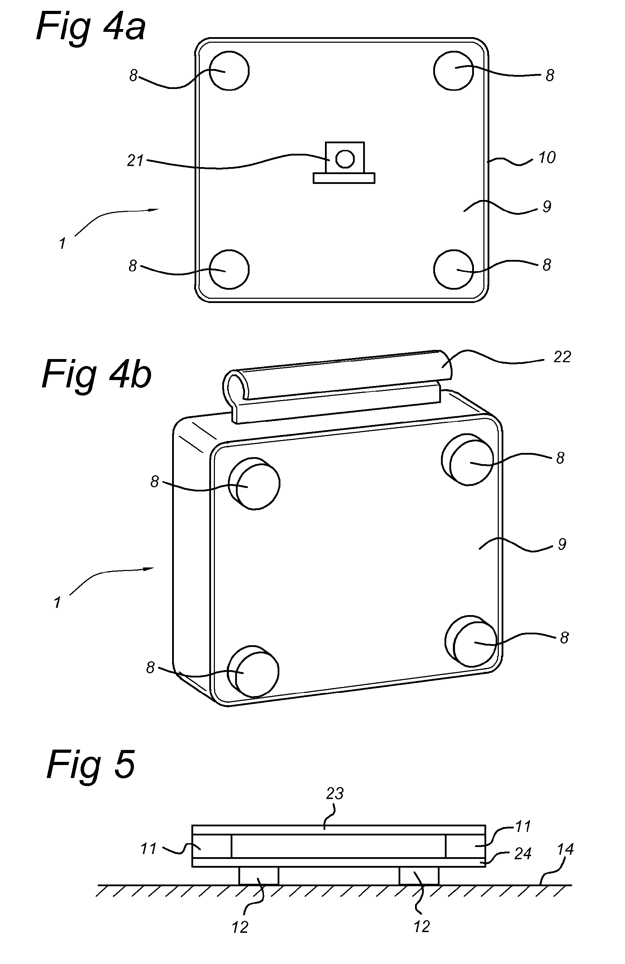

Figure 4a shows a weighing scale 1 according the invention with a further fastening means 21 provided on the bottom surface 9 of the housing 10. The fastening means 21, for example a hook element or a hole, is designed to cooperate with a hanger device, such as a brace or hook (not shown) affixed to a vertical surface. The scale may then be attached to a non metal vertical surface, provided that the hanger device has been affixed to said vertical surface.

Figure 4b shows a variation, where the fastening means is formed as a hook element protruding from the housing 10, in particular from a side 7 of the housing 10. Such a protruding hook can for example be attached to a hanger device in the form of a bar element affixed to a wall.

Figure 5 shows a side view of a further weighing scale according the invention. In use, an object to be weighed (not shown) may be placed on top of the weighing surface formed as a top plate 23. The top plate 23 is supported by weight sensors 11, which in turn are supported by bottom plate 24. Underneath bottom plate 24 magnetic elements 12 are provided as supports, which rest on top of supporting surface 14. The magnetic elements 12 shown in figure 5 are not placed directly underneath the weight sensors. The magnetic elements 12 can be said to indirectly support, via the bottom plate 24, the weight sensors 11.

The invention is not limited to the exemplary embodiments illustrated in the figures. A person skilled in the art may apply various modifications without departing from the scope of the invention as formulated in the attached claims.

## Claims

1. Weighing scale (1) comprising a weight sensor (11) arranged for determining the weight of an object placed on a weighing surface (3, 23) of the weighing scale when the weighing scale is in a first orientation, for example when the weighing scale is positioned on a supporting surface (14),
**characterized in, that**
the weighing scale has a magnetic element (12) suitable for attaching the scale (1) in a second orientation to an essentially vertical surface (15) comprising metal, whereby the magnetic element (12) is arranged such that when the scale is in the first orientation, the weight sensor (11) is directly or indirectly supported by the magnetic element (12).

2. Weighing scale according to claim 1, wherein the magnetic element (12) is positioned directly underneath, with respect to the first orientation, the weight sensor (11).

3. Weighing scale according to claim 1 or 2, wherein the weighing scale has a housing (10) comprising the weighing surface (3), and wherein the weight sensor (11) is essentially surrounded by or protruding from the housing (10).

4. Weighing scale according to claim 3, wherein the magnetic element protrudes from the housing (10).

5. Weighing scale according to claims 3, wherein the magnetic element is essentially surrounded by the housing (10).

6. Weighing scale according to any of the claims 3-5, wherein the housing (10) of the weighing scale is provided with a fastening element, arranged to cooperate with a hanger device that is affixed to the vertical surface.

7. Weighing scale according to claim 6, wherein the fastening element is attachable to and detachable from the housing (10).

8. Weighing scale according to any of the preceding claims, wherein the magnetic elements (12) are attachable to and detachable from the weighing scale (1).

9. Weighing scale (1) comprising a weight sensor (11) arranged for determining the weight of an object placed on a weighing surface (3, 23) of the weighing scale when the weighing scale is in a first orientation, for example when the weighing scale is positioned on a supporting surface (14),
**characterized in, that**
the weighing scale has a magnetic element (12) suitable for attaching the scale (1) in a second orientation to an essentially vertical surface (15) comprising metal, whereby the magnetic element (12) is arranged such that when the scale is in the first orientation, any magnetic force between the magnetic element and a supporting surface (14) comprising metal is not registered by the weight sensor (11).

10. Weighing scale according to claim 9 in combination with any of the features of claims 2-8.
